# EUROPEAN PATENT SPECIFICATION

(11) **EP 1 512 716 B1**
(45) Date of publication and mention of the grant of the patent: **04.11.2009**
(21) Application number: 04019114.0
(22) Date of filing: 12.08.2004
(51) Int. Cl.: C08K 3/00, C08L 13/00, C08L 15/00

(54) **Nitrile polymer compositions for magnetic seal applications**
Nitrilpolymerzusammensetzung zur Anwendung bei magnetischen Dichtungen
Compositions de polymère nitrile utilisées dans des joints d'étanchéité magnétiques

(30) Priority: 25.08.2003 CA 2438111
(43) Date of publication of application: 09.03.2005
(73) Proprietor: Lanxess Inc., Sarnia, Ontario N7T 7M2 (CA)
(72) Inventor: Pazur, Richard, Sarnia, ON N7S 3E5 (CA); Ferrari, Lorenzo, Bright's Grove, ON N0N 1C0 (CA)
(74) Representative: Zobel, Manfred

(56) References cited:
- EP-A2- 0 418 807
- WO-A1-03/022916
- DE-T1- 10 083 914

## Description

### Field of the Invention.

The present invention relates to a rubber compound comprising at least one hydrogenated carboxylated nitrile rubber, at least one hydrogenated nitrile rubber and at least one magnetic compound, a curable rubber compound comprising said rubber compound and at least one vulcanization agent and a magnetic shaped article comprising said rubber compound.

### Background of the Invention

Hydrogenated nitrile rubber (HNBR), prepared by the selective hydrogenation of nitrile rubber (NBR, a co-polymer comprising repeating units derived from at least one conjugated diene, at least one unsaturated nitrile and optionally further comonomers), and hydrogenated carboxylated nitrile rubber (HXNBR), prepared by the selective hydrogenation of carboxylated nitrile rubber (XNBR, a, preferably statistical, ter-polymer comprising repeating units derived from at least one conjugated diene, at least one unsaturated nitrile, at least one conjugated diene having a carboxylic group (e.g an alpha-beta-unsaturated carboxylic acid) and optionally further comonomers are specialty rubbers which have very good heat resistance, excellent ozone and chemical resistance, and excellent oil resistance. Coupled with the high level of mechanical properties of the rubber (in particular the high resistance to abrasion) it is not surprising that HXNBR and HNBR have found widespread use in the automotive (seals, hoses, bearing pads) oil (stators, well head seals, valve plates), electrical (cable sheathing), mechanical engineering (wheels, rollers) and shipbuilding (pipe seals, couplings) industries, amongst others.

Commercially available HNBR has a Mooney viscosity in the range of from 55 to 105, a molecular weight in the range of from 200,000 to 500,000 g/mol, a polydispersity greater than 3.0 and a residual double bond (RDB) content in the range of from 0.1 to 18% (by IR spectroscopy).

HXNBR and a method for producing it is for example known from WO-01/77185-A1.

WO-01/41162-A1 discloses a magnetic rubber composition based on 100 phr of hydrogenated nitrile-butadiene rubber (15 to 50% acrylonitrile content) possessing a degree of hydrogenation of 80 to 99%, 300 to 1800 parts of strontium ferrite and barium ferrite, 0.5 to 2 parts of a silane coupling agent and 1 to 10 parts of a lubricant. It is claimed that, when magnetized the composition has sufficient magnetic properties to be used as an encoder. This reference is silent about the benefits of using HXNBR/HNBR blends.

US-6,001,526 claims a binder carrier containing at least a magnetic particle and binder resin which comprises at least an ethylenic unsaturated nitrile copolymer and an optional silicone-modified acrylic resin. This reference is silent about the benefits of using HXNBR/HNBR blends.

EP-A-0 418 808 describes a binder system comprising highly saturated nitrile or polymer alloy of the same, containing additives which are compatible for processing and subsequent electron beam curing. The binder system is highly loaded anywhere from 50 to 70 volume percent with high energy rare earth particles. This reference is silent about the benefits of using HXNBR/HNBR blends.

WO-A-03/022916 discloses elastomeric compositions comprising at least one hydrogenated carboxylated nitrile rubber, at least one hydrogenated nitrile rubber, at least one filler and further additives (see table 1). The compositions have high abrasion resistance and are suitable for use in conveyor belts for heavy duty service at elevated temperature and for seals used in drilling in oil wells. The use of a magnetic filler is not suggested.

EP-A-0418807 discloses flexible magnetic compositions comprising high energy ferrite magnetic particles in a flexible high temperature resistant and oil resistant polymer, which is a highly saturated nitrile rubber and further additives. The use of a hydrogenated carboxylated nitrile rubber is not suggested.

### Summary of the Invention

In one of it's aspects, the present invention relates to a rubber compound comprising at least one hydrogenated, preferably statistical, carboxylated nitrile rubber, at least one hydrogenated nitrile rubber and at least one magnetic compound.

It is preferred that the magnetic compound is based on a ferrite compound, in particular a strontium, barium or strontium/barium ferrite mixture, even more preferred are strontium ferrite powders.

In still another one of it's aspects, the present invention relates to a vulcanizable rubber compound comprising at least one hydrogenated, preferably statistical, carboxylated nitrile rubber, at least one hydrogenated nitrile rubber, at least one magnetic compound, at least one vulcanization agent, and optionally further filler(s).

In still another one of it's aspects, the present invention relates to a magnetic shaped article comprising said rubber compound comprising at least one hydrogenated, preferably statistical, carboxylated nitrile rubber, at least one hydrogenated nitrile rubber, at least one magnetic compound and optionally further filler(s).

### Brief Description of the Drawings

Figure 1 shows the results of the Stress-Strain Immersion Testing of compounds 1a-1c after 168 hrs. at 150 °C in Lithium grease as exemplified in the Examples section.
Figure 2 shows the results of the Stress-Strain Immersion Testing of compounds 1a-1c after 168 hrs. at 150 °C in polyurea CV grease as exemplified in the Examples section.

### Description of the Invention

As used throughout this specification, the term "nitrile rubber" or NBR is intended to have a broad meaning and is meant to encompass a copolymer having repeating units derived from at least one conjugated diene, at least one alpha,beta-unsaturated nitrile and optionally further one or more copolymerizable monomers.

As used throughout this specification, the term "carboxylated nitrile rubber" or XNBR is intended to have a broad meaning and is meant to encompass a copolymer having repeating units derived from at least one conjugated diene, at least one alpha,beta-unsaturated nitrile, at least one alpha-beta-unsaturated carboxylic acid or alpha-beta-unsaturated carboxylic acid derivative and optionally further one or more copolymerizable monomers.

As used throughout this specification, the term "hydrogenated" or HNBR/HXNBR is intended to have a broad meaning and is meant to encompass a NBR or XNBR wherein at least 10 % of the residual C-C double bonds (RDB) present in the starting NBR or XNBR are hydrogenated, preferably more than 50 % of the RDB present are hydrogenated, more preferably more than 90 % of the RDB are hydrogenated, even more preferably more than 95 % of the RDB are hydrogenated and most preferably more than 99 % of the RDB are hydrogenated.

The conjugated diene may be any known conjugated diene in particular a C₄-C₆ conjugated diene. Preferred conjugated dienes are butadiene, isoprene, piperylene, 2,3-dimethyl butadiene and mixtures thereof. Even more preferred C₄-C₆ conjugated dienes are butadiene, isoprene and mixtures thereof. The most preferred C₄-C₆ conjugated diene is butadiene.

The alpha,beta-unsaturated nitrile may be any known alpha,beta-unsaturated nitrile, in particular a C₃-C₅ alpha,beta-unsaturated nitrile. Preferred C₃-C₅ alpha,beta-unsaturated nitriles are acrylonitrile, methacrylonitrile, ethacrylonitrile and mixtures thereof. The most preferred C₃-C₅ alpha,beta-unsaturated nitrile is acrylonitrile.

Preferably, the HNBR comprises in the range of from 40 to 85 weight percent of repeating units derived from one or more conjugated dienes and in the range of from 15 to 60 weight percent of repeating units derived from one or more unsaturated nitriles. More preferably, the HNBR comprises in the range of from 60 to 75 weight percent of repeating units derived from one or more conjugated dienes and in the range of from 25 to 40 weight percent of repeating units derived from one or more unsaturated nitriles. Most preferably, the HNBR comprises in the range of from 60 to 70 weight percent of repeating units derived from one or more conjugated dienes and in the range of from 30 to 40 weight percent of repeating units derived from one or more unsaturated nitriles.

The alpha,beta-unsaturated carboxylic acid may be any known alpha,beta-unsaturated acid copolymerizable with the diene(s) and the nitile(s), in particular acrylic, methacrylic, ethacrylic, crotonic, maleic, fumaric or itaconic acid, of which acrylic and methacrylic are preferred.

The alpha,beta-unsaturated carboxylic acid derivative may be any known alpha,beta-unsaturated acid derivative copolymerizable with the diene(s) and the nitile(s), in particular esters, amides and anhydrides, preferably esters and anhydrides of acrylic, methacrylic, ethacrylic, crotonic, maleic, fumaric or itaconic acid.

Preferably, the HXNBR comprises in the range of from 39.1 to 80 weight percent of repeating units derived from one or more conjugated dienes, in the range of from 5 to 60 weight percent of repeating units derived from one more unsaturated nitriles and 0.1 to 15 percent of repeating units derived from one or more unsaturated carboxylic acid or acid derivative. More preferably, the HXNBR comprises in the range of from 60 to 70 weight percent of repeating units derived from one or more conjugated dienes, in the range of from 20 to 39.5 weight percent of repeating units derived from one or more unsaturated nitriles and 0.5 to 10 percent of repeating units derived from one or more unsaturated carboxylic acid or acid derivative. Most preferably, the HXNBR comprises in the range of from 56 to 69.5 weight percent of repeating units derived from one or more conjugated dienes, in the range of from 30 to 37 weight percent of repeating units derived from one or more unsaturated nitriles and 0.5 to 7 percent of repeating units derived from one or more unsaturated carboxylic acid or acid derivative. Preferably said HXNBR is a statistical copolymer with in particular the carboxylic functions randomly distributed throughout the polymer chains.

Optionally, the HNBR and/or HXNBR may further comprise repeating units derived from one or more copolymerizable monomers. Repeating units derived from one or more copolymerizable monomers will replace either the nitrile or the diene portion of the nitrile rubber and it will be apparent to the skilled in the art that the above mentioned figures will have to be adjusted to result in 100 weight percent.

The Mooney viscosity of the rubber was determined using ASTM test D1646.

The composition of the inventive rubber compound may vary in wide ranges and in fact it is possible to tailor the properties of the resulting compound by varying the ratio HXNBR(s)/HNBR(s).

The present invention is not limited to a special magnetic compound. Thus, any magnetic compound known by the skilled in the art should be suitable. However, powdered magnetic compounds are preferred. Preferred magnetic compounds are ferrites, in particular magnetoplumbite-structure ferrite particles. Suitable magnetic compounds may be exemplified by barium ferrite particles, strontium ferrite particles or barium-strontium ferrite particles, which are represented by the formula: AO.ₙFe₂O₃ (wherein A is Ba, Sr or Ba-Sr; and n is 5.0 to 6.5), or barium ferrite particles, strontium ferrite particles or barium-strontium ferrite particles further containing at least one element selected from the group consisting of Ti, Mn, Al, La, Zn, Bi and Copreferably in an amount of from 0.1 to 7.0 mol %. The magnetic compounds, in particular magnetoplumbite-structure ferrite particles, used in the present invention, preferably have an average particle size of from 0.1 to 20.0 µm, preferably 1.0 to 5.0 µm, more preferably 1.0 to 2.0 µm; preferably a BET specific surface area of from 1 to 10 m/g, more preferably 1 to 5 m/g, most preferably 1 to 2 m/g; preferably a coercive force (iHc) of from 1,500 to 7,000 Oe, more preferably 1,500 to 4,000 Oe, most preferably 1,500 to 2,000 Oe; and preferably a residual magnetization of from 20 to 60 emu/g, more preferably 30 to 50 emu/g, most preferably 30 to 40 emu/g.

Other preferred magnetic compounds include the rare-earth magnet particles,such as rare-earth magnet particles represented by the formula: R-T-B or R-T-N, wherein N and B are for nitrogen and boron and R is selected from the group consisting of Sc, Y, La, Ce, Pr, Nd, Pm, Sm, Eu, Gd, Tb, Dy, Ho, Er, Tm, Yb, Lu, and mixtures thereof; T is selected from the group consisting of Fe, Co, Ni, Ga, Ti, and mixtures thereof;. Among them, rare-earth magnet particles represented by the above-described formulae, wherein R is Nd (a part of Nd may be substituted with any other rare earth element); and T is Fe (a part of Fe may be substituted with at least one element selected from the group consisting of Co, Ga and Ti), are preferred. The rare-earth magnet particles preferably have an average particle size of from 1 to 100 µm, more preferably 1 to 80 µm, most preferably 3 to 50 µm; preferably a BET specific surface area of from 0.5 to 2 m/g, more preferably 0.7 to 1.8 m/g; preferably a coercive force (iHc) of from 3,000 to 9,000 Oe, more preferably 4,000 to 9,000 Oe; and preferably a residual magnetization of from 80 to 400 emu/g, more preferably 100 to 400 emu/g.

The inventive compound comprises preferably in the range of from 0.1 to 2000 phr (per hundred parts of rubber) of magnetic compound(s), more preferably from 10-1500 phr, most preferably from 500-1000 phr of magnetic compound(s).

The HXNBR(s) and HNBR(s) comprised in the inventive compound are not restricted. However, preferably they have a Mooney viscosity (ML 1+4 @ 100°C) above 30. Blending of two or more nitrile rubber polymers having a different Mooney viscosity will usually result in a blend having a bi-modal or multi-modal molecular weight distribution. According to the present invention, the final blend has preferably at least a bi-modal molecular weight distribution.

In order to provide a vulcanizable rubber compound, at least one vulcanizing agent or curing system has to be added. The invention is not limited to a special curing system, however, peroxide curing system(s) are preferred. Furthermore, the invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the vulcanizable rubber compound is in the range of from 1 to 10 phr, preferably from 4 to 8 phr. Subsequent curing is usually performed at a temperature in the range of from 100 to 200 °C, preferably 130 to 180 °C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzene).

The vulcanizable rubber compound may further comprise fillers. The filler may be an active or an inactive filler or a mixture thereof. The filler may be in particular:
- highly dispersed silicas, prepared e.g. by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr arid Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc and mixtures of these. These mineral particles have hydroxyl groups on their surface, rendering them hydrophilic and oleophobic. This exacerbates the difficulty of achieving good interaction between the filler particles and the rubber. For many purposes, the preferred mineral is silica, especially silica made by carbon dioxide precipitation of sodium silicate. Dried amorphous silica particles suitable for use in accordance with the invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG.

Often, use of carbon black as a filter is advantageous. Usually, carbon black is present in the polymer blend in an amount of in the range of from 20 to 200 parts by weight, preferably 30 to 150 parts by weight, more preferably 40 to 100 parts by weight. Further, it might be advantageous to use a combination of carbon black and mineral filler in the inventive vulcanizable rubber compound. In this combination the ratio of mineral fillers to carbon black is usually in the range of from 0.05 to 20, preferably 0.1 to 10.

The vulcanizable rubber compound may further comprise other natural or synthetic rubbers such as BR (polybutadiene), ABR (butadiene/acrylic acid-C₁-C₄-alkylester-copolymers), EVM (ethylene vinyl acetate-copolymers), AEM (ethylene acrylate-copolymers), CR (polychloroprene), IR (polyisoprene), SBR (styrene/butadiene-copolymers) with styrene contents in the range of 1 to 60 wt%, EPDM (ethylene/propylene/diene-copolymers), FKM (fluoropolymers or fluororubbers), and mixtures of the given polymers. Careful blending with said rubbers often reduces cost of the polymer blend without sacrificing the processability. The amount of natural and/or synthetic rubbers will depend on the process condition to be applied during manufacture of shaped articles and is readily available by few preliminary experiments.

The vulcanizable rubber compound according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are e.g. from 0.1 to 50 phr. Preferably the vulcanizable compound comprising said solution blend further comprises in the range of 0.1 to 20 phr of one or more organic fatty acids as an auxiliary product, preferably a unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8-22 carbon atoms; more preferably 12-18. Examples include stearic acid, palmitic acid and oleic acid and their calcium-, zinc-, magnesium-, potassium- and ammonium salts.

The ingredients of the final vulcanizable rubber compound comprising said rubber compound are often mixed together, suitably at an elevated temperature that may range from 25 °C to 200 °C. Normally the mixing time does not exceed one hour and a time in the range from 2 to 30 minutes is usually adequate. Mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted precrosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

Due to the improved tear, tear propagation and abrasion resistance, the vulcanizable rubber compound is very well suited for the manufacture of a magnetic shaped article, such as a seal, hose, bearing pad, stator, well head seal, valve plate, cable sheathing, wheel roller, pipe seal, in place gaskets or shaft seal.

### EXAMPLES

### Description of tests:

### Cure rheometry:

Vulcanization was followed on a Moving Die Rheometer (MDR 2000(E)) using a frequency of oscillation of 1.7 Hz and a 1 °arc at 180°C for 30 minutes total run time. The test procedure follows ASTM D-5289.

### Stress-strain.

Samples were prepared by curing a macro sheet at 180ºC for 14 minutes, after which the appropriate sample was died out into standard ASTM die C dumbells. The test was conducted at 23ºC and complies with ASTM D-412 Method A.

### Hardness:

All hardness measurements were carried out with an A-2 type durometer following the procedure outlined in ASTM D-2240.

### Tear resistance:

Appropiate samples of Die B and Die C geometries were cut out of a macro sheet (cured 14 minutes at 180°C). Both tests are designed to give an indication of the resistance to tear of the rubber. The test procedure complies with ASTM D 624.

### Stress-strain immersion:

The change in stress-strain properties and weight/volume change of vulcanized rubber after immersion of test specimens for a specified time and temperature in liquids is measured. This testing method complies with ASTM D-471.

### Pico Abrasion:

This test method complies with ASTM D-2228 and indicates the cutting abrasion resistance of the vulcanizates.

### Taber Abrasion:

This test estimates the relative resistance of the surface of the rubber vulcanizates to a rubbing type of abrasion. It complies with ASTM D3389 Method B.

### Description of Ingredients and General Mixing Procedure:

Therban® A 3907 (HNBR available from Bayer Inc.)
Therban® XT VP KA 8889 (hydrogenated carboxylated nitrile (HXNBR) rubber commercially available from Bayer Inc.)
Armoslip® CP - 9-octadecenamide available from Lion Corp.
Naugard® 445 - p-dicumyl diphenylamine by Uniroyal Chemicals.
Plasthall® TOTM - trioctyl trimellitate by The C.P. Hall-Co., Inc.
Stearic acid Emersol™ 132 NF - stearic acid by Acme-Hardesty Co.
Strontium Ferrite Powder #UHE-14 - strontium oxide/ferric oxide available from Fermag Technologies.
Vulkanox ZMB-2/C5 - zinc-4- and -5-methyl-2-mercapto-benzimidazole (ZMMBI) by Bayer AG
DIAK #7 ™ - triallyl isocyanurate by DuPont.
Struktol™ ZP 1014 - zinc peroxide dispersion (50%) by Struktol Co. of America.
Kadox® 920- zinc oxide by St. Lawrence Chem. Inc.
Vulcup® 40 KE -bis 2-(t-butyl-peroxy) diisopropylbenzene (40% on Burgess Clay by Geo Specialty Chemicals Inc.
Lithium Grease - Constant Velocity Joint Grease (meets GM specification 7843867) available from Motormaster®.

Polyurea CV Grease available from Southwest Petroleum Chemicals.

The rubbers and the additives were mixed in a 1.57 liter Banbury internal tangential mixture with the Mokon set to 30 °C and a rotor speed of 55 RPM for 2 minutes. The Armoslip® CP, Naugard 445, Plasthall TOTM, Vulkanox ZMB-2/C5 and Kadox 920 were then added to the compound and the compound was mixed for another 3 minutes. To the cooled sample, the Diak#7 or Struktol ZP 1014 depending on the sample, and the Vulcup 40KE were added on a 10" x 20" mill with the Mokon set to 30 °C. Several three quarter cuts were performed to homogenize the curatives into the masterbatch followed by six end-wise passes of the compound.

### Example 1

Three batches were prepared according to Table 1.

**Table 1-Ingredients for compounds 1a-1c**

| **Example** | **1a** | **1b** | **1c** |
|---|---|---|---|
| THERBAN® A 3907 | 100 | 75 | 50 |
| THERBAN® XT^{™} VP KA 8889 | 0 | 25 | 50 |
| ARMOSLIP^{™} CP | 5 | 5 | 5 |
| NAUGARD® 445 | 2 | 2 | 2 |
| PLASTHALL® TOTM | 5 | 5 | 5 |
| STEARIC ACID EMERSOL^{™} 132 NF | 0.5 | 0.5 | 0.5 |
| STRONTIUM FERRITE POWDER #UHE-14 | 700 | 700 | 700 |
| VULKANOX^{™} ZMB-2/C5 (ZMMBI) | 0.4 | 0.4 | 0.4 |
| ZINC OXIDE (KADOX^{™} 920) | 4 | 0 | 0 |
| DIAK #7 | 1.5 | 1.5 | 1.5 |
| STRUKTOL^{™} ZP 1014 | 0 | 4 | 4 |
| VULCUP^{™} 40KE | 7.5 | 7.5 | 7.5 |

Table 2 shows the compound curing, physical and aging properties of the three examples 1 a through 1c.

| **Example** | **1a** | **1b** | **1c** |
|---|---|---|---|
| ***MDR CURE CHARACTERISTICS (1. 7 Hz, 180C, 1 deg arc, 30 min)*** | | | |
| MH (dN.m) | 51.52 | 51.3 | 49.7 |
| ML (dN.m) | 3.88 | 6.17 | 6.97 |
| Delta MH-ML (dN.m) | 47.64 | 45.13 | 42.73 |
| ts 1 (min) | 0.51 | 0.54 | 0.51 |
| t' 25 (min) | 1.46 | 1.44 | 1.41 |
| t' 50 (min) | 2.62 | 2.59 | 2.56 |
| t' 90 (min) | 6.79 | 6.77 | 6.56 |
| t' 95 (min) | 8.45 | 8.48 | 8.17 |
| Delta t'50 - t'10 (min) | 1.76 | 1.76 | 1.71 |
| | | | |

| ***STRESS STRAIN (DUMBELLS, die C)*** | | | |
|---|---|---|---|
| Hardness Shore A2 (pts.) | 82 | 88 | 88 |
| Ultimate Tensile (MPa) | 2.17 | 5.71 | 7.33 |
| Ultimate Elongation (%) | 306 | 114 | 105 |
| Stress @ 25 (MPa) | 3.07 | 7.47 | 8.56 |
| Stress @ 50 (MPa) | 3.36 | 6.95 | 8.81 |
| Stress @ 100 (MPa) | 2.34 | 5.82 | 7.65 |
| Stress @ 200 (MPa) | 2.14 | n.a. | n.a. |
| Stress @ 300 (MPa) | 2.18 | n.a. | n.a. |
| Tear Strength (kN/m) | 16.41 | 36.32 | 34.11 |
| | | | |

| ***DIE B TEAR (500 mm*/*min)*** | | | |
|---|---|---|---|
| Tear Strength (kN/m) | 26.71 | 62.64 | 66.99 |
| | | | |

| ***PICO ABRASION (80 revolutions, normal severity)*** | | | |
|---|---|---|---|
| Abrasion Volume Loss (cm3) | 0.0856 | 0.0313 | 0.0208 |
| Abrasive Index | 22.81 | 62.41 | 93.64 |
| | | | |

| ***TABER ABRASION (H18 Calibrate wheel, 1000 Kc)*** | | | |
|---|---|---|---|
| Abrasion Volume Loss (ml/Kc) | 1.8496 | 0.951 | 0.8146 |

From table 2, it can be seen that incrementalTherban® XT (HXNBR) addition to the control compound 1a does not substantially change the level of cure represented by the maximum torque (MH) values. Also, scorch (ts2) and cure (t'50 and t'90) times do not change in examples 1b and 1c compared to 1a. A rise is observed however in the minimum torque upon Therban® XT addition due to its higher raw polymer Mooney (7 Mooney points higher than Therban® A3907 - (HNBR)) and to ionic crosslinking provided by the carboxylate groups and zinc ions between adjacent chains of HXNBR.

It is clearly seen from the stress strain results that Therban® XT addition causes an increase to hardness and stress values at all elongations. This can be explained by the additional ionic crosslinking in the polymer matrix. High hardness compounds are often necessary for magnetic HNBR applications such as wheel seals. At the same time, an increase in tensile strength is observed with a loss in compound elongation. High tensile strength is crucial in highly loaded articles as normally, tensile strength drops rapidly at high filler concentrations. Tear strength values measured either by die C or die B clearly increase upon Therban® XT addition to Therban® A3907. Tear strengths are increased by at least a factor of two upon using 25 phr of Therban® XT with 75 phr Therban® A3907 (1b). Like tensile strength, the tear resistance benefits enormously by adding Therban® XT to the highly loaded Therban® A3907 formulation.

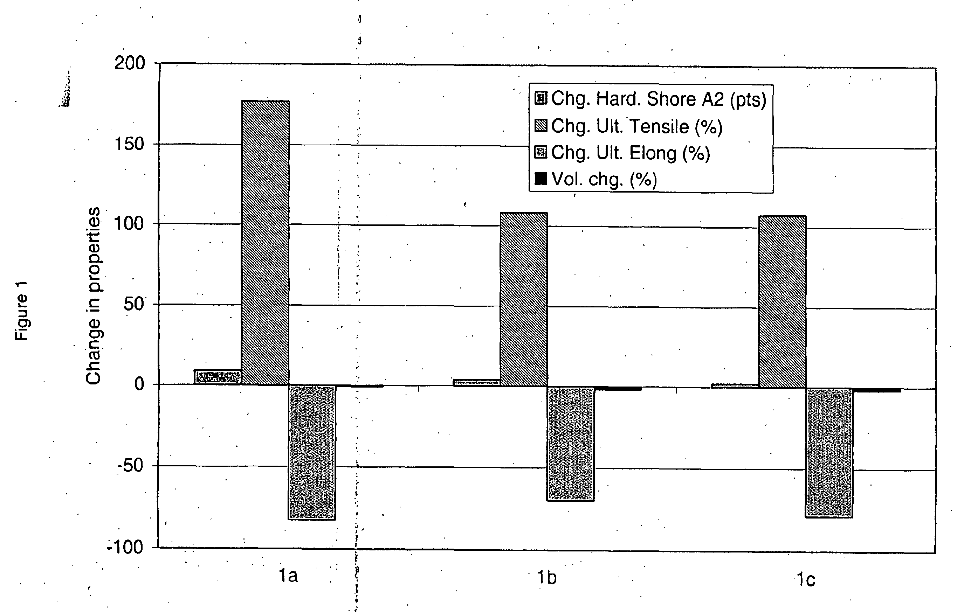

The cutting abrasion resistance which is represented by the Pico abrasion testing, is clearly improved by adding Therban® XT to Therban® A3907. In addition, the rubbing abrasion resistance (Taber) also improves dramatically with Therban® XT addition. An enhancement in wear characteristics prolongs the life of the final article. Figure 1 demonstrates that the Lithium grease resistance is improved by Therban® XT addition. Compound hardening is undesirable upon aging. Hardening as well as tensile and elongation loss are all minimized in examples 1b and 1c upon aging.

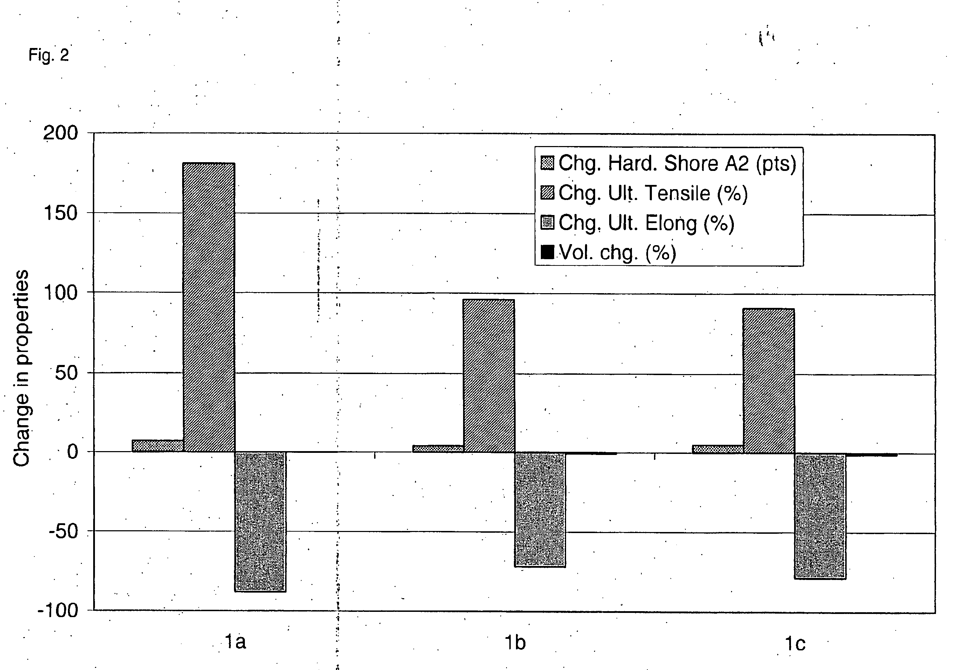

Figure 2 shows that compounds 1b and 1c exhibit excellent polyurea CV grease resistance compared to the control 1a. Again, compound hardening is lessened and tensile and elongation losses are minimized compared to the control 1a. Rubber articles such as shaft seals are often in contact with grease and improved grease resistance is advantageous for part longevity.

## Claims

1. A rubber compound comprising at least one hydrogenated carboxylated nitrile rubber, at least one hydrogenated nitrile rubber and at least one magnetic compound.

2. A rubber compound according to claim 1 wherein the hydrogenated carboxylated nitrile rubber is a statistical co-polymer.

3. A rubber compound according to claim 1 or 2, wherein the magnetic compound is a ferrite compound.

4. z A vulcanizable rubber compound comprising a rubber compound according to any of claims 1-3 and further at least one vulcanization agent.

5. A vulcanizable rubber according to claim 4 further comprising at least one filler.

6. A magnetic shaped article comprising a compound according to any of claims 1-5.

7. A magnetic shaped article according to claim 6 in the form of a seal, gasket, belt, hose, bearing pad, stator, well head-seal, valve plate, cable sheathing, wheel roller, in place gasket, shaft seal or pipe seal.

## Patentansprüche

1. Kautschukverbindung, umfassend mindestens einen hydrierten carboxylierten Nitrilkautschuk, mindestens einen hydrierten Nitrilkautschuk und mindestens eine magnetische Verbindung.

2. Kautschukverbindung gemäß Anspruch 1, wobei der hydrierte carboxylierte Nitrilkautschuk ein statistisches Copolymer ist.

3. Kautschukverbindung gemäß Anspruch 1 oder 2, wobei die magnetische Verbindung eine Ferritverbindung ist.

4. Vulkanisierbare Kautschukverbindung, umfassend eine Kautschukverbindung gemäß mindestens einem der Ansprüche 1 - 3 und ferner mindestens ein Vulkanisierungsmittel.

5. Vulkanisierbarer Kautschuk gemäß Anspruch 4, ferner umfassend mindestens einen Füllstoff.

6. Magnetischer geformter Artikel, umfassend eine Verbindung gemäß einem beliebigen der Ansprüche 1 - 5.

7. Magnetischer geformter Artikel gemäß Anspruch 6 in Form einer (bzw. eines) Dichtung, Abdichtung, Gurtes, Schlauchs, Auflagerblocks, Stators, Bohrlochdichtung, Ventilscheibe, Kabelummantelung, Laufrolle, anstehenden Dichtung, Wellendichtung oder Rohrdichtung.

## Revendications

1. Composé de caoutchouc comprenant au moins un caoutchouc nitrile carboxylé hydrogéné, au moins un caoutchouc nitrile hydrogéné et au moins un composé magnétique.

2. Composé de caoutchouc selon la revendication 1, **caractérisé en ce que** le caoutchouc nitrile carboxylé hydrogéné est un copolymère statistique.

3. Composé de caoutchouc selon la revendication 1 ou 2, **caractérisé en ce que** le composé magnétique est un composé de ferrite.

4. Composé de caoutchouc vulcanisable comprenant un composé de caoutchouc selon l'une quelconque des revendications 1 à 3 et en outre au moins un agent de vulcanisation.

5. Caoutchouc vulcanisable selon la revendication 4, comprenant en outre au moins une charge.

6. Article formé magnétique comprenant un composé selon l'une quelconque des revendications 1 à 5.

7. Article formé magnétique selon la revendication 6, sous forme de garniture, de joint d'étanchéité, de bande, de tuyau, de coussinet, de stator, de garniture de tête de puits, de plaque de soupape, de revêtement de câble, de cylindre de roue, de joint d'étanchéité intégré, de garniture d'arbre ou de garniture de canalisation.
